(19) Europäisches Patentamt
European Patent Office
Office européen des brevets

(11) EP 4 585 560 A1

(12) EUROPEAN PATENT APPLICATION
published in accordance with Art. 153(4) EPC

(43) Date of publication:
**16.07.2025 Bulletin 2025/29**

(21) Application number: **23863368.9**

(22) Date of filing: **14.08.2023**

(51) International Patent Classification (IPC):
***C01B 32/174*** (2017.01) ***H01M 4/62*** (2006.01)
***H01M 4/139*** (2010.01) ***H01M 4/13*** (2010.01)
***H01M 4/02*** (2006.01)

(52) Cooperative Patent Classification (CPC):
**H01M 4/13; C01B 32/174; C09D 5/24; C09D 7/45; C09D 7/61; C09D 7/65; C09D 7/68; C09D 7/69; C09D 7/70; H01M 4/02; H01M 4/139; H01M 4/36; H01M 4/62; H01M 4/625; H01M 10/052;** (Cont.)

(86) International application number:
**PCT/KR2023/012027**

(87) International publication number:
**WO 2024/053889 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.09.2022 KR 20220112212**

(71) Applicant: **Betterial Co., Ltd.**
**Seongnam-si, Gyeonggi-do 13210 (KR)**

(72) Inventors:
- **KANG, Seong Kyun**
  **Gimpo-si Gyeonggi-do 10068 (KR)**
- **YOO, Kwang Hyun**
  **Seoul 05698 (KR)**
- **KIM, Taek Gyoung**
  **Seoul 07636 (KR)**
- **LEE, Jin Yeong**
  **Seoul 07592 (KR)**

(74) Representative: **Puschmann Borchert Kaiser Klettner**
**Patentanwälte Partnerschaft mbB**
**Bajuwarenring 21**
**82041 Oberhaching (DE)**

# (54) CARBON NANOTUBE DISPERSION SOLUTION, PREPARATION METHOD THEREFOR, ELECTRODE SLURRY COMPOSITION COMPRISING SAME, ELECTRODE COMPRISING SAME, AND SECONDARY BATTERY COMPRISING SAME

(57) The present disclosure relates to a carbon nanotube dispersion including carbon nanotubes, a first dispersant having an amide group, a second dispersant having at least one functional group selected from the group consisting of hydroxyl and carboxyl groups, and sulfur. The present disclosure also relates to a method of preparing the dispersion, an electrode slurry composition including the dispersion, an electrode including the electrode slurry composition, and a secondary battery including the electrode.

EP 4 585 560 A1

(52) Cooperative Patent Classification (CPC): (Cont.)
H01M 2004/021; H01M 2004/027; Y02E 60/10

## Description

### [Technical Field]

The present application claims priority to Korean Patent Application No.10-2022-0112212, filed September 5, 2022, the contents of which are incorporated herein.

The present disclosure relates to a carbon nanotube dispersion, a preparation method thereof, an electrode slurry composition including the same, an electrode including the same, and a secondary battery including the same.

### [Background Art]

Secondary batteries are batteries that can be repeatedly used through a discharging process which converts chemical energy into electrical energy and a charging process which is reverse to the discharging process. A secondary battery is composed of a positive electrode, a negative electrode, an electrolyte, and a separator. Typically, each of the positive and negative electrodes is composed of an electrode current collector and an electrode active material layer formed on the electrode current collector. The electrode active material layer is formed by applying an electrode slurry composition including an electrode active material, a conductive material, and a binder on the electrode current collector and then drying and rolling the electrode current collector.

Conductive materials are used to improve the conductivity of the electrode active material. Conventionally, sphere-type conductive materials such as carbon black have been used. However, since the sphere-type conductive materials did not exhibit a significant effect in improvement of the electrical conductivity, the conductive materials were used in an excessively large amount to give a sufficient effect, which had the problem of reducing the amount of the electrode active material in the electrode and resulted in reduction in battery capacity.

To overcome such a problem, attempts are being actively made to use highly conductive carbon nanotubes (CNTs) as a conductive material. Even a small amount of carbon nanotubes can provide good conductivity, the use of carbon nanotubes significantly reduces the amount of a conductive material used in an electrode of a battery compared with the case of using carbon black, thereby increasing the electrical capacity of the battery.

To use the carbon nanotube as a negative electrode conductive material, it is required to prepare an aqueous dispersion with low viscosity in terms of processability.

Polyvinylpyrrolidone (PVP), which is a dispersant with an amide group, is a polymer surfactant. PVP is used as a dispersant, an emulsifier, a thickener, etc. in various dispersion systems and is known to be effective in dispersing carbon nanotubes (Patent Document 1).

In addition, polyacrylic acid which is a polyacid containing a carboxylic group or tannic acid is also known to be effective in dispersing carbon nanotubes.

Summarizing the information known above, it is assumed that a better CNT dispersion effect can be obtained when polyvinylpyrrolidone and polyacid are co-used, but in reality, mixing these materials generally result in excessively strong bonding between the two materials, thereby forming insolubles or agglomerates which reduce the dispersibility of the dispersion.

[Documents of Related Art]

[Patent Document]

(Patent Document 1) Korean Patent Application No. 10-2011-0118460

[Non-Patent Document]

(Non-Patent Document 1) Toxicol. Res., 2015.4, 160-168

### [Disclosure]

### [Technical Problem]

The present disclosure relates to a carbon nanotube dispersion with improved dispersibility, a preparation method thereof, an electrode slurry composition including the same dispersion, an electrode including the same slurry composition, and a secondary battery including the same electrode.

Technical Solution

**[Technical Solution]**

One embodiment of the present disclosure provides a carbon nanotube dispersion including: a carbon nanotube;

a first dispersant containing an amide group;
a second dispersant containing at least one functional group selected from the group consisting of a hydroxyl group and a carboxylic group; and
sulfur.

Another embodiment of the present disclosure provides a method of preparing the above-described carbon nanotube dispersion, the method including: mixing the carbon nanotube, the first dispersant containing an amide group, and the second dispersant containing at least one functional group selected from the group consisting of hydroxyl and carboxylic groups.
A further embodiment of the present disclosure provides an electrode slurry composition including the above-described carbon nanotube dispersion, a silicon-based electrode active material, and a binder.
A yet further embodiment of the present disclosure provides an electrode including an electrode active material layer made of the above-described electrode slurry composition.
A still yet further embodiment of the present disclosure provides a secondary battery including the above-described electrode.

**[Advantageous Effects]**

The carbon nanotube dispersion according to one embodiment of the present disclosure has significantly low viscosity and improved carbon nanotube dispersibility.
The carbon nanotube dispersion according to one embodiment of the present disclosure has excellent coating properties and processability when used to manufacture an electrode.

**[Description of Drawings]**

FIG. 1 illustrates an experimental result of Experimental Example 1;
FIGS. 2 through 4 illustrate the result of confirming whether sulfur is present in a first dispersant used in Examples and Comparative Examples.

**[Best Mode]**

Hereinafter, the present disclosure will be described in detail.
A carbon nanotube dispersion according to one embodiment of the present disclosure is a dispersion including carbon nanotubes. Specifically, the carbon nanotube dispersion refers to a system in which carbon nanotubes are dispersed in a dispersant and do not agglomerate.
One embodiment of the present disclosure provides a carbon nanotube dispersion including: carbon nanotubes; a first dispersant containing an amide group; a second dispersant containing at least one functional group selected from the group consisting of hydroxyl and carboxyl groups; and sulfur.
Conventionally, the first dispersant containing an amide group is known to be effective in dispersing carbon nanotubes (Patent Document 1), and the second dispersant containing at least one functional group selected from the group consisting of hydroxyl and carboxyl groups has the effect of reducing the viscosity of the dispersion due to the influence of the functional group (Non-Patent Document 1).
In addition, the oxygen of the amide group in the first dispersant and the functional group (hydroxyl or carboxyl group) in the second dispersant form hydrogen bonds with each other and have the effect of contributing to the reduction of the viscosity of the dispersion. However, there is a problem that insoluble matter and agglomerates (complexes) are formed due to the strong hydrogen bonds. In this case, there are many restrictions on the selection of the dispersant. For example, it is required to control the content of each of the first and second dispersants, or it is required to use only specific types of dispersants as the first and/or second dispersant.
The inventors have completed the present disclosure by discovering that the agglomeration problem of the first dispersant and the second dispersant described above is mitigated when the dispersion includes elemental sulfur. In such a case, the viscosity of the dispersion is low even though carbon nanotubes which have a large specific surface area are contained in the dispersion. The effect of mitigating the agglomeration can be confirmed by visually observing a carbon

nanotube dispersion including the materials above after the carbon nanotube dispersion is stored for a certain period of time.

The carbon nanotube dispersion according to one embodiment of the present disclosure includes carbon nanotubes with excellent conductivity and dispersibility so that the agglomeration of the carbon nanotubes is minimized. The characteristics can be confirmed from significantly low viscosity of the dispersion.

The carbon nanotube dispersion according to one embodiment of the present disclosure is characterized by including sulfur. The sulfur may exist in the dispersion as a compound form, an elemental form, or an ionic form. For example, the sulfur may be derived from a compound containing sulfur, and these compounds will be described later. The presence and content of the sulfur can be confirmed by elemental analysis.

In one embodiment of the present disclosure, the content of sulfur in the carbon nanotube dispersion may be 0.01-10 wt%, 0.05-8 wt%, or 0.1-5 wt% on a solid basis. The content range of the sulfur element can be satisfied by controlling the content of a sulfur-containing compound. The content of the sulfur element can be measured and calculated using an elemental analyzer (EA), and the details thereof will be described later.

In one embodiment of the present disclosure, the content of the sulfur element may be 0.01-20%, 0.1-10%, or 1-5% based on the total content of oxygen (O) and nitrogen (N) on a solid basis. When the above numerical range is satisfied, the ratio of the total content of oxygen and nitrogen elements involved in hydrogen bonding and the content of the sulfur element is controlled so that the dispersants will not agglomerate with each other, and the dispersibility of the carbon nanotubes can be improved. The content of each element can be measured and calculated using an elemental analyzer (EA), and the details thereof will be described later.

In one embodiment of the present disclosure, a portion or the entirety of the first dispersant may undergo sulfur substitution. When a portion of the first dispersant is substituted with sulfur, the remainder of the first dispersant may be composed of substances that are not substituted with sulfur. For example, the first dispersant may be composed of a sulfur-substituted portion and a non-sulfur-substituted portion.

In one embodiment of the present disclosure, the sulfur-substituted proportion of the first dispersant may account for 10-100 mol%, 20-80 mol%, or 40-60 mol%.

In one embodiment of the present disclosure, the first dispersant may exhibit at least one peak selected from the group consisting of a first peak at 1,110 $cm^{-1}$ to 1,050 $cm^{-1}$, a second peak at 1,140 $cm^{-1}$ to 1,180 $cm^{-1}$, and a third peak at 1,180 $cm^{-1}$ to 1,220 $cm^{-1}$ in a Fourier-transform infrared (FTIR) spectrum. The first to third peaks indicate the presence of S=O bonds in the dispersant, and the presence of these peaks confirms that the first dispersant is substituted with sulfur.

In one embodiment of the present disclosure, since the first dispersant has an amide group, the first dispersant can form hydrogen bonds with hydroxyl or carboxyl groups of the second dispersant described below.

In one embodiment of the present disclosure, the first dispersant may be polyvinylpyrrolidone, polyester amide, polycarboxylic amide, polyamido amine, thioamido amine, water soluble nylon, or a combination thereof. Since the first dispersant has an amide group, the first dispersant improves the viscosity and suppress changes in viscosity over time.

In one embodiment of the present disclosure, the first dispersant may have a weight average molecular weight of 1,000-100,000 g/mol, preferably 2,000-80,000 g/mol, more preferably 2,000-30,000 g/mol, and still more preferably 2,000-15,000 g/mol. When the weight average molecular weight of the first dispersant is less than 1,000 g/mol, the dispersion of the carbon nanotubes may decrease, and a problem in which the first dispersant elutes during electrode manufacturing may occur. On the other hand, when the weight average molecular weight exceeds 100,000 g/mol, the viscosity of the carbon nanotube dispersion may increase and the coating and processability may be deteriorated. Therefore, it is preferable that the weight average molecular weight of the first dispersant fall within the above-mentioned numerical range.

In one embodiment of the present disclosure, since the second dispersant has a hydroxyl or carboxyl group, the second dispersant can form a hydrogen bond with the amide group of the first dispersant described above.

In one embodiment of the present disclosure, the second dispersant may include an aromatic ring. In this case, the viscosity of the dispersion can be effectively reduced due to the complicated structure of the second dispersant.

In one embodiment of the present disclosure, the second dispersant may include two or more aromatic rings. For example, the second dispersant may be one or more types selected from the group consisting of baicalin, luteolin, taxifolin, myricetin, quercetin, rutin, catechin, epigallocatechin gallate, butein, piceatenol, and tannic acid. Preferably, the second dispersant may be tannic acid, quercetin, epigallocatechin gallate, or a combination thereof.

In one embodiment of the present disclosure, the second dispersant may be a phenolic compound. In the phenolic compound, one or more aromatic rings may have one or more structures selected from the group consisting of a phenolic structure, a catechol structure, a gallol structure, and a naphthol structure. The phenolic structure has one hydroxyl group attached to a benzene ring, the catechol structure has two hydroxyl groups attached to a benzene ring, the gallol structure has three hydroxyl groups attached to a benzene ring, and the naphthol structure has one hydroxyl group attached to naphthalene.

In one embodiment of the present disclosure, the second dispersant may be a polyacrylic acid compound. The polyacrylic acid compound is an acrylic acid compound including two or more acidic hydrogen atoms.

In one embodiment of the present disclosure, the polyacrylic acid compound may be polyacrylic acid (PAA) or a polyacrylic acid derivative. The polyacrylic acid derivative may be a polyacrylic acid-co-maleic acid (PAAMA).

In one embodiment of the present disclosure, the second dispersant may include a compound including an aromatic ring, a polyacrylic acid compound, or a combination thereof. The compound including an aromatic ring and the polyacrylic acid compound are as described above.

In one embodiment of the present disclosure, the weight ratio of the first dispersant to the second dispersant may be 1: 10 to 10: 1, 1:5 to 5:1, or 1: 1 to 1:5. When the above range is satisfied, the effect of dispersing carbon nanotubes is improved, and the viscosity of the dispersion is maintained at a low level.

In one embodiment of the present disclosure, the content of the first dispersant may be in a range of 0.01 to 10 wt%, 0.01 to 5 wt%, or 0.1 to 3 wt%, based on the total weight of the dispersion.

In one embodiment of the present disclosure, the content of the second dispersant may be in a range of 0.01 to 10 wt%, 0.01 to 5 wt%, or 0.1 to 3 wt%, based on the total weight of the dispersion.

In one embodiment of the present disclosure, the carbon nanotubes are used to improve the conductivity of electrodes. The carbon nanotubes are formed by shaping graphite sheets into a cylinder form having a nanoscale diameter. The carbon nanotubes have a $sp^2$ bond structure. The carbon nanotubes may be conductive or semiconductive depending on the angle at which the graphite sheets are rolled and on the structure of the graphite sheets. The carbon nanotubes can be classified into single-walled carbon nanotubes (SWCNT), double-walled carbon nanotubes (DWCNT), and multi-walled carbon nanotubes (MWCNT) according to the number of bonds forming the wall. These carbon nanotubes can be appropriately selected depending on the purpose of the dispersion. In addition, the carbon nanotubes may form a two-dimensional shape in which the carbon nanotubes agglomerate or are arranged in two dimensions. For example, the carbon nanotubes are regularly arranged in a certain direction to form a bundle or rope shape. Alternatively, the carbon nanotubes are irregularly arranged in many directions and entangled to form an entangled sphere or potato shape.

In one embodiment of the present disclosure, the carbon nanotubes may be single-walled carbon nanotubes (SWCNT) or multi-walled carbon nanotubes (MWCNT).

In one embodiment of the present disclosure, the BET specific surface area of the carbon nanotube may be in a range of 10 to 5,000 $m^2/g$, preferably 30 to 3,000 $m^2/g$, and more preferably 50 to 2,000 $m^2/g$. When the above numerical range is satisfied, the effect of enhancing conductivity is excellent. The BET specific surface area of the carbon nanotube may vary by the type of the carbon nanotube.

In one embodiment of the present disclosure, the BET specific surface area of the single-walled carbon nanotube may be in a range of 800 to 5,000 $m^2/g$, preferably 800 to 3,000 $m^2/g$, and more preferably 900 to 2,000 $m^2/g$. When the above numerical range is satisfied, there is an excellent effect of enhancing conductivity.

In one embodiment of the present disclosure, the BET specific surface area of the multi-walled carbon nanotube may be in a range of 10 to 1,200 $m^2/g$, preferably 30 to 1,000 $m^2/g$, and more preferably 50 to 800 $m^2/g$. When the above numerical range is satisfied, there is an excellent effect of enhancing conductivity.

In one embodiment of the present disclosure, the content of the carbon nanotubes may be in a range of 0.01 to 10 wt% and preferably 0.1 to 8 wt%, based on the total weight of the carbon nanotube dispersion. The content of the carbon nanotubes can be appropriately adjusted according to the specific surface area of the used carbon nanotubes. For example, when carbon nanotubes with a specific surface area of 800 $m^2/g$ or more are used, the content of the carbon nanotubes may be in a range of 0.01 to 5 wt%, preferably 0.01 to 3 wt%, and more preferably 0.01 to 2 wt% based on the total weight of the carbon nanotube dispersion. When the specific surface area and content of the carbon nanotubes is outside the above range, there are problems that the process costs increase due to reduction in the loading amount during electrode manufacturing, the adhesion decreases due to binder migration during electrode drying, and the viscosity of the carbon nanotube dispersion increases.

In one embodiment of the present disclosure, the carbon nanotube may be composed of two or more carbon nanotube units. The carbon nanotube unit may be formed by shaping a graphite sheet into a cylinder form with a nanoscale diameter and may have a $sp^2$ bond structure.

In one embodiment of the present disclosure, the diameter of the carbon nanotube unit may be in a range of 1 to 200 nm, 1 to 150 nm, or 1 to 100 nm. With the above numerical range being satisfied, the dispersibility of the carbon nanotubes may be improved, and an increase in resistance of an electrode can be prevented in the case where the carbon nanotubes are applied to the electrode.

In one embodiment of the present disclosure, the length of the carbon nanotube unit may be in a range of 0.1 to 200 $\mu$m, 0.1 to 150 $\mu$m, or 0.5 to 100 $\mu$m. With the above numerical range being satisfied, the dispersibility of the carbon nanotubes may be improved, and an increase in resistance of an electrode may be prevented when the carbon nanotubes are applied to the electrode.

In one embodiment of the present disclosure, an aspect ratio (i.e., ratio of length to diameter) of the carbon nanotube may be in a range of 5 to 50,000 or 10 to 15,000. With the above numerical range being satisfied, the dispersibility of the carbon nanotubes may be improved, and an increase in resistance of an electrode can be prevented in the case

where the carbon nanotubes are applied to the electrode.

In one embodiment of the present disclosure, the average particle size (D50) of the carbon nanotube may be in a range of 0.1 to 20 μm, 0.5 to 1 μm, 1-5 μm or 2 to 4 μm. The average particle size (D50) refers to the value of the particle size at 50% of the cumulative particle size distribution of the carbon nanotubes. The average particle size (D50) can be measured, for example, by using a laser diffraction method. When the above range is satisfied, the carbon nanotubes do not agglomerate with each other, and the dispersibility of the carbon nanotubes can be improved.

In one embodiment of the present disclosure, the viscosity of the carbon nanotube dispersion at a temperature of 25°C and a shear rate of 15 $sec^{-1}$ may be 4,000 cPs or less, 3,000 cPs or less, 1,000 cPs or less, or 600 cPs or less. The lower limit of the viscosity range is not particularly limited because the lower the viscosity, the better the dispersibility. However, considering the purpose of the present disclosure, the viscosity may be 10 cPs or more, 30 cPs or more, or 50 cPs or more. When the above viscosity range is satisfied, the carbon nanotubes in the carbon nanotube dispersion do not agglomerate with each other, and the processability is improved when the carbon nanotube dispersion is used for electrode manufacturing.

The viscosity of the carbon nanotube dispersion can be measured by methods commonly used in the art to which this technology pertains. For example, it may be measured by using Brookfield's DVNextCP Rheometer at a temperature of 25°C and a shear rate of 15 $sec^{-1}$. For more accurate measurements, the prepared carbon nanotube dispersion may be stored at 25°C for a week before the measurement.

In one embodiment of the present disclosure, the value of the carbon nanotube dispersion, calculated according to Expression 1 below, may be in a range of 2 to 10, 2 to 6.5, or 3 to 6. The calculated value of Expression 1 below is a shear thinning index of the dispersion. The index refers to the ratio of the viscosities measured at different shear rates. When the above range is satisfied, uniform mixing is possible during the manufacturing of electrodes by preventing the dispersion from being less flowable due to an excessive increase in viscosity which occurs under static conditions. In addition, since the sedimentation of the carbon nanotube particles is prevented, the storage stability of the carbon nanotube dispersion is improved.

[Expression 1]

$$\text{Shear thinning index (STI)} = V_{low}/V_{high}$$

In Expression 1 above,

$V_{low}$ is the viscosity of the dispersion at a temperature of 25°C and a shear rate of 15 $sec^{-1}$, and
Vhigh is the viscosity of the dispersion at a temperature 25°C and a shear rate of 150 $sec^{-1}$.

In one embodiment of the present disclosure, the calculated value of Expression 2 below for the carbon nanotube dispersion may be in a range of 1 to 5, 1 to 3, or 1.1 to 2. The calculated value of Expression 2 below shows the relationship between the shear thinning index (STI) characteristics of the above-described dispersion and the average particle size of the carbon nanotubes included in the dispersion. In general, when the particle size (D50) of the carbon nanotube is excessively small, the shear thinning index (STI) of the dispersion tends to increase because the carbon nanotubes agglomerate with each other. In addition, when the particle size (D50) of the carbon nanotube is excessively large, the overall viscosity and shear thinning index (STI) of the carbon nanotube tend to increase because the carbon nanotubes are not sufficiently dispersed and form a network structure.

However, the carbon nanotube dispersion according to one embodiment of the present disclosure has improved viscosity stability over time even though the particle sizes of the carbon nanotubes are small when the calculated value of Expression 2 falls within the numerical range described above.

[Expression 2]

$$\frac{STI}{D50/\mu m}$$

In Expression 2 above,

STI is the shear thinning index of the dispersion,
D50 is the average particle size of the carbon nanotube.

In one embodiment of the present disclosure, the carbon nanotube dispersion may include an alkali metal

element. As the carbon nanotube of the present disclosure includes the alkali metal element, the dispersibility of the material included in the dispersion may be improved. Specifically, the first dispersant and the second dispersant included in the dispersion may form complexes with each other. Since these complexes have low solubility in solvents like water, there is a problem that the viscosity of the dispersion increases. However, the alkali metal element contained in the carbon nanotube dispersion of the present disclosure solves the problem by dissolving the complexes.

In one embodiment of the present disclosure, the form of the alkali metal is not particularly limited, and the alkali metal may exist in the form of an alkali metal salt thereof.

In one embodiment of the present disclosure, the concentration of the alkali metal element may be in a range of 1 to 300 ppm, 5 to 200 ppm, or 5 to 150 ppm, in the carbon nanotube dispersion.

In one embodiment of the present disclosure, the carbon nanotube dispersion may include at least one alkali metal salt selected from the group consisting of KOH, NaOH, $K_2CO_3$, $Na_2CO_3$, or $LiCo_3$.

In one embodiment of the present disclosure, when the first dispersant is polyvinylpyrrolidone resin, the molar ratio of the alkali metal salt may be 60 mol or less, 30 mol or less, or 25 mol or less, with respect to 100 mol of vinylpyrrolidone monomer. The lower limit of the molar ratio is not particularly limited, but the molar ratio may be 0.1 mol or more, 1 mol or more, or 2 mol or more. When the above range is satisfied, the viscosity of the carbon nanotube dispersion can be controlled to be in a range of 1,300 cPs or less at a temperature of 25°C and a shear rate of 15 $sec^{-1}$.

The molar ratio of the alkali metal salt can be calculated from the molecular weight of each of the alkali metal salt and the vinylidone monomer and the content (wt%) of each of the alkali metal salt and the polyvinylidone. Specifically, the value can be calculated by Expression 3 below.

Molar ratio of alkali metal salt = {(wt% of alkali metal salt)/(molecular weight of alkali metal salt)}/{(wt % of polyvinylidone)/(molecular weight of vinylidone monomer) } * 100 [Expression 3]

For example, based on the total weight of the dispersion, when the content of each of the polyvinylpyrrolidone and the alkali metal salt (LiOH) is in a range of 0.6 wt% and 0.01 wt%, the molecular weight of the alkali metal salt (LiOH) is 24 g/mol, and the molecular weight of the vinylidone monomer is 111.14 g/mol, and the molar ratio of alkali metal salt is calculated to be 7.7 mol per 100 mol of the vinylpyrrolidone monomer [7.7={(0.01)/(24)}/{(0.6)/(111.14)}*100]

The vinylpyrrolidone monomer refers to a 5-membered lactam ring linked to a vinyl group and is a unit composing the polyvinylpyrrolidone-based resin. Specifically, the vinylpyrrolidone monomer may be a monomer represented by Formula 1 in the polyvinylpyrrolidone represented by Formula 1.

[Formula 1]

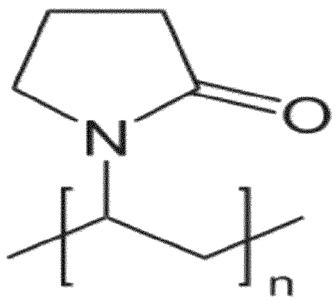

[Formula 2]

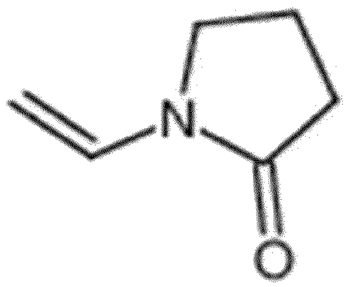

In one embodiment of the present disclosure, the carbon nanotube dispersion may further contain a solvent. The

solvent is used to supply carbon nanotubes as a carbon nanotube dispersion by pre-dispersing the carbon nanotubes to prevent the carbon nanotubes from agglomerating which may occur when the carbon nanotubes are directly mixed with an electrode active material to prepare an electrode slurry composition.

In one embodiment of the present disclosure, the solvent may be an aqueous solvent. For example, the aqueous solvent may be water. When water is used as the solvent, it is easy to control the viscosity of the dispersion, and there is an effect of not producing toxic substances.

Another one embodiment of the present disclosure relates to a method of preparing a carbon nanotube dispersion, the method including: mixing a carbon nanotube, a first dispersant containing an amide group, and a second dispersant containing at least one functional group selected from the group consisting of hydroxyl and carboxylic groups.

In one embodiment of the present disclosure, the step of mixing the carbon nanotube, the first dispersant containing an amide group, and the second dispersant containing at least one functional group selected from the group consisting of hydroxyl and carboxylic groups may be performed under temperature conditions where the physical properties do not change. For example, the step may be performed at 50°C or less and more specifically in a temperature range of 5°C to 50°C.

In one embodiment of the present disclosure, the step of dispersing the carbon nanotube in the dispersion may be performed by a milling method using a ball mill, bead mill, disc mill, basket mill, or high-pressure homogenizer and more specifically by a milling method using a disc mill or high-pressure homogenizer.

When the disc mill is used, the size of the beads can be suitably determined depending on the type and amount of the carbon nanotubes and the type of the dispersant. Specifically, the diameter of the beads may be in a range of 0.1 to 5 mm and more specifically a range of 0.5-4 mm. Furthermore, bead milling may be performed at a speed of 2,000 to 10,000 rpm and more specifically at a speed of 5,000 to 9,000 rpm.

When the milling is performed using a high-pressure homogenizer, a plunger pump presses the mixture and pushed the mixture through a gap of a homogenizing valve, so that the mixture undergoes cavitation, shearing, impact, explosion, etc. while passing through the gap.

In one embodiment of the present disclosure, the step of dispersing the carbon nanotubes in the dispersion may be performed for 10 to 120 minutes and more specifically for 20 to 90 minutes so that the carbon nanotubes can be sufficiently dispersed.

A further embodiment of the present disclosure relates to an electrode slurry composition including the above-described carbon nanotube dispersion, an electrode active material, and a binder.

In one embodiment of the present disclosure, the electrode active material includes a silicon-based electrode active material. The silicon-based electrode active material may include at least one selected from the group consisting of metal silicon (Si), silicon oxide ($SiO_x$, wherein $0<x<2$), silicon carbide (SiC), and Si-Y alloy (wherein Y is an element selected from the group consisting of alkali metals, alkaline earth metals, group 13 elements, group 14 elements, transition metals, rare earth elements, and combinations thereof, but examples of the silicon-based electrode active material do not Si). The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

The silicon-based electrode active materials show higher capacity characteristics than carbon-based electrode active materials. Therefore, when such a silicon-based electrode active material is used, better capacity characteristics can be obtained. However, since the silicon-based electrode active materials exhibit a large volume change during charging and discharging, the battery characteristics are rapidly deteriorated while the battery is repeatedly charged and discharged. This deteriorates cycle characteristics and inhibits the commercialization of the batteries using the material. However, when the carbon nanotube is used as a conductive material as in the present disclosure, cycle characteristics can be improved even when a silicon-based electrode active material is used. Therefore, by using the electrode slurry composition of the present disclosure which includes the carbon nanotube dispersion of the present disclosure and the silicon-based electrode active material, a secondary battery with excellent cycle and capacity characteristics can be implemented.

In one embodiment of the present disclosure, the electrode slurry composition may further include other types of electrode active material in addition to the silicon-based electrode active material. Examples of the additionally addable electrode active material include: carbonaceous materials such as artificial graphite, natural graphite, graphitized carbon fiber, and amorphous carbon; metallic compounds such as Al, Sn, Pb, Zn, Bi, In, Mg, Ga, Cd, Si alloy, and Al alloy that can be alloyed with lithium; metal oxides such as $SnO_2$, vanadium oxide, and lithium vanadium oxide that can be doped and undoped with lithium; and composite materials such as an Sn-C composite including a metallic compound and a carbonaceous material. Among the examples, the carbonaceous material is particularly preferable.

In one embodiment of the present disclosure, the total amount of the electrode active material which is a combination of the silicon-based electrode active material and other types of electrode active materials may be in a range of 70 to 99 wt%, preferably a range of 80 to 98 wt%, with respect to the total solid content of the electrode slurry composition. When the content of the electrode active material satisfies the above range, excellent capacity characteristics can be

obtained.

In one embodiment of the present disclosure, the binder is used to secure adhesion between the active materials or between an active material and the current collector. For the binders, general binders used in the art may be used and their types are not particularly limited. For example, the binder may be any one or a mixture of two or more selected from polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluorinated rubber, or various copolymers thereof.

In one embodiment of the present disclosure, the binder may be included in an amount of 5 wt% or less, and preferably 1 to 3 wt% based on the total solid content of the electrode slurry composition. When the content of the binder satisfies the above range, an increase in electrode resistance is minimized, and excellent electrode adhesion can be obtained.

In one embodiment of the present disclosure, the electrode slurry composition may further include a solvent for viscosity control, if necessary. In this case, the solvent may be water, an organic solvent, or a mixture thereof. Examples of the organic solvent include: amide-based polar organic solvents such as dimethylformamide (DMF), diethylformamide, dimethylacetamide (DMAc), N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; A glycol such as ethylene glycol, diethylene glycol, triethylene glycol, propylene glycol, 1,3-propanediol, 1,3-butanediol, 1,5-pentanediol, and hexylene glycol; polyhydric alcohols such as glycerin, trimethyrolpropane, pentaerythritol, and sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; ketones such as acetone, methyl ethyl ketone, methyl propyl ketone, and cyclopentanone; and esters such as ethyl acetate, γ-butyrolactone, and β-propiolactone. As the solvent, each of the exemplary materials can be used solely, or a combination of the two or more exemplary materials may be used. However, the solvent is not limited to the examples.

In one embodiment of the present disclosure, the electrode slurry composition may further include additives such as a viscosity modifier and a filler if necessary.

In one embodiment of the present disclosure, there is provided an electrode including an electrode active material layer formed from the above-described electrode slurry composition. Specifically, the electrode can be manufactured by applying the above-described electrode slurry composition of the present disclosure and drying it to form an electrode active material layer. More specifically, the electrode active material layer may be formed by applying the electrode slurry composition on an electrode current collector and then drying it. Alternately, the electrode active material layer may be formed by applying the electrode slurry composition on a support, peeling off the resulting film from the support, and laminating the film on an electrode current collector. After the electrode active material layer is thus formed, a rolling process may be additionally performed as necessary. In this case, the drying and rolling process can be performed under suitable conditions considering the physical properties of the electrode to be finally manufactured.

In one embodiment of the present disclosure, the material of the electrode current collector is not particularly limited if the material has conductivity and does not cause chemical changes in a battery cell. For example, any one selected from copper, stainless steel, aluminum, nickel, titanium, or alloys thereof may be used. Alternatively, a member that is surface-treated with carbon, nickel, titanium, or silver, or calcined carbon may be used.

In one embodiment of the present disclosure, the electrode current collector may have a thickness of 3 to 500 μm, and the binding of the electrode active material layer to the electrode current collector can be enhanced by forming fine irregularities on the surface of the electrode current collector. The electrode current collector can be provided in any form. For example, the electrode current collector may take the form of a film, a sheet, a foil, a meshed body, a porous body, a foamed body, and a non-woven fabric.

In one embodiment of the present disclosure, the electrode may be a negative electrode.

One embodiment of the present disclosure provides a secondary battery including the above-described electrode.

One embodiment of the present disclosure provides a secondary battery including: a positive electrode; a negative electrode; and a separator and electrolyte interposed between the positive electrode and the negative electrode, in which at least one of the positive and negative electrodes is the electrode described above.

In one embodiment of the present disclosure, the secondary battery may be a lithium secondary battery.

In one embodiment of the present disclosure, the separator isolates the negative electrode and the positive electrode from each other and provides a passage for the movement of lithium ions. Any separator that can be used in secondary batteries can be used without particular limitations. Specifically, a porous polymer film made from, for example, a polyolefin-based polymer such as an ethylene homopolymer, a propylene homopolymer, an ethylene/butene copolymer,

an ethylene/hexene copolymer, or an ethylene/methacrylate copolymer can be used as the separator. Alternatively, a laminate of two or more layers made from the above exemplary materials can be used as the separator. Further alternatively, a conventional porous non-woven fabric member made of high melting point glass fiber or polyethylene terephthalate fiber may be used as the separator. Further alternatively, to gain good thermal resistance or mechanical strength, a coated separator containing a ceramic component or a polymeric material may be used, and this separator may be a single-layered structure or a multi-layered structure.

In one embodiment of the present disclosure, the electrolyte may be selected from organic liquid electrolytes, inorganic liquid electrolytes, solid polymer electrolytes, gel-type polymer electrolytes, inorganic solid electrolytes, and inorganic molten electrolytes which can be used in secondary batteries, but the type of the electrolyte is not limited thereto.

**[Mode for Invention]**

Hereinafter, the present disclosure will be described in greater detail with reference to the examples of the present disclosure.

<Preparation of carbon nanotube>

Carbon nanotubes shown below are prepared.

- CNT-1 (single-walled carbon nanotube; manufactured by OCSiA; product name 01RW03; specific surface area > 800 $m^2/g$; and average diameter of each unit = 2 nm)
- CNT-2 (multi-walled carbon nanotube; manufactured by JEIO; product name 6A; specific surface area = 643 $m^2/g$; and average diameter of each unit = 9 to 10 nm)
- CNT-3 (multi-walled carbon nanotube; manufactured by LG CHEM; product name BT1003M; specific surface area = 186 $m^2/g$; and average diameter of each unit = 13 nm)

<Preparation of first dispersant>

Ar gas was added to a reactor to stabilize the atmosphere. A mixed solution was prepared by dissolving the monomer N-vinylpyrrolidone and potassium sulfite in water. The mixed solution was stirred and reacted in an Ar atmosphere at a temperature of 40°C for 24 hours, and then was slowly cooled to room temperature. A certain amount of water was evaporated from the mixed solution to prepare a concentrate. The concentrate underwent precipitation, filtration, and drying by acetone to produce PVP-1 containing sulfur (S).

PVP-2 purchased from Aldrich and PVP-3 purchased from Ashland were prepared as sulfur-free dispersants.

Attenuated Total Reflection (ATR) was used to determine the presence of sulfur in the first dispersant. PVP-1 exhibited peaks appeared at 1,030 $cm^{-1}$, 1,160 $cm^{-1}$, and 1,200 $cm^{-1}$ (FIG. 2), but PVP-2 (FIG. 3) and PVP-3 (FIG. 4) did not exhibit peaks at the same positions. The above result confirmed that PVP-1 as the first dispersant contained sulfur.

<Preparation of second dispersant>

Tannic acid (TA) purchased from Aldrich and polyacrylic acid (PAA, weight average molecular weight of 2,000) purchased from Thermo Scientific were prepared.

<Preparation of dispersion>

Example 1

A carbon nanotube dispersion was prepared by mixing 0.4 wt% of the CNT-1 as carbon nanotubes, 0.48 wt% of PVP-1 as a first dispersant, 0.12 wt% of TA as a second dispersant, and 99 wt% of distilled water as a solvent, and by mixing the mixture with a high-pressure homogenizer.

Example and Comparative Example

As other examples and comparative examples, dispersions were prepared by varying the weight and type of each material as shown in Table 1 below. The physical properties of each dispersion were analyzed.

The composition of each of the dispersions prepared in the example and comparative example and the results of each experimental example are summarized in Table 1 below. The content of each component is based on the total weight of the dispersion.

Experimental Example 1: observation of dispersant agglomeration

Test solutions were prepared in the same manner as the examples and comparative examples described above, except that carbon nanotubes were not added. Each of the test solutions was mixed using a vortex mixer at room temperature and was left for 6 hours to observe agglomeration and precipitation.

The test solutions of Example 4 and Example 1 did not show agglomeration and precipitation, but the test solution of Comparative Example 1 showed agglomeration and precipitation (FIG. 1).

Experimental Example 2: viscosity measurement

DVNextCP Rheometer available from Brookfield was used to measure viscosity at 25°C at shear rates of 2.5 $sec^{-1}$ and 15 $sec^{-1}$.

Experimental Example 3: calculation of average particle size

A commercially available laser diffraction particle size measurement device (Malvern Mastersizer3000) was used for laser diffraction. The average particle size (D50) at 50% of the particle size distribution was calculated using the device. D10 and D90 are the particle sizes at 10% and 90% of the particle size distribution, respectively.

Experimental Example 4: measurement of sulfur content

- Sample preparation

The dispersions prepared in the examples and comparative examples were dried in a 90°C convection oven for 3 days and then ground using a mixer grinder to prepare a powdered sample.

- Measurement of content of sulfur

An elemental analyzer (EA) was used for the measurement.

Organic samples were oxidized to $CO_2$, $H_2O$, $NO_2$, and $SO_2$ using a catalyst at high temperature (about 1,000°C), and the generated gas was separated using a GC column (Packed column). Detection was performed using a thermal conductive detector (TCD), and calibration curves for each of C, H, N, and S were drawn using standard materials in advance. The content of each element was quantified in % from the GC chromatogram.

[Table 1]

| Category | | Exam ple 1 | Exam ple 2 | Exam ple 3 | Exam ple 4 | Exam ple 5 | Exam ple 6 | Exam ple 7 | Compar ative Example 1 | Compar ative Example 2 | Compar ative Example 3 | Compar ative Example 4 |
|---|---|---|---|---|---|---|---|---|---|---|---|---|
| CNT | type | CNT-1 | CNT-1 | CNT-1 | CNT-1 | CNT-2 | CNT-3 | CNT-1 | CNT-1 | CNT-1 | CNT-2 | CNT-3 |
| | content | 0.4 | 0.4 | 0.4 | 0.4 | 1.5 | 5 | 0.4 | 0.4 | 0.4 | 1.5 | 5 |
| The first dispersan t | type | PVP-1 | PVP-1 | PVP-1 | PVP-1 + PVP-2 | PVP-1 | PVP-1 | PVP-2 | PVP-2 | PVP-3 | PVP-2 | PVP-2 |
| | content | 0.48 | 0.48 | 0.48 | 0.24+0 .24 | 0.96 | 1.2 | 0.48 | 0.48 | 0.48 | 0.96 | 1.2 |
| The sec- ond dis- persan t | type | TA | PAA | TA+P AA | TA | TA | TA | TA | TA | TA | TA | TA |
| | content | 0.12 | 0.12 | 0.06+0 .06 | 0.12 | 0.24 | 0.3 | 0.12 | 0.12 | 0.12 | 0.24 | 0.3 |
| Additive | Type (content) | - | - | - | - | - | - | Sodiu m sulfite (0.01 8) | - | - | - | - |
| Experim ental Example 2 | Viscosity (cP@2.5/ s) | 294 | 236 | 572 | 989 | 180 | 49 | 960 | 4,073 | 2,620 | 4,714 | 6,790 |
| | Viscosity (cP@2.5/ s) | 121 | 61 | 130 | 365 | 79 | 27 | 360 | 718 | 838 | 690 | 608 |
| Experim ental Ex- ample 3 | CNT parti- cle size (D50, $\mu$m | 2.05 | 1.91 | 1.54 | 2.01 | 2.28 | 0.89 | 2.31 | 11.7 | 9.13 | 24.5 | 5.17 |
| Experim ental Example 4 | O(%) | 15.02 | 16.11 | 15.25 | 13.92 | 9.54 | 5.25 | 13.24 | 14.37 | 13.35 | 9.57 | 5.01 |
| | N (%) | 5.86 | 4.8 | 5.42 | 5.57 | 3.99 | 2.21 | 5.43 | 4.4 | 4.2 | 4.13 | 2.12 |
| | C (%) | 72.09 | 71.76 | 72.4 | 72.86 | 80.94 | 89.06 | 75.06 | 74.9 | 75.86 | 81.4 | 90.13 |
| | H (%) | 4.36 | 4.46 | 4.49 | 4.61 | 3.09 | 1.63 | 4.12 | 5.27 | 5.48 | 3.07 | 1.62 |
| | S (%) | 0.56 | 0.59 | 0.51 | 0.24 | 0.35 | 0.18 | 0.43 | Non-de- tected | Non-de- tected | Non-de- tected | Non-de- tected |
| | S/(O+N) *100 (%) | 2.68 | 2.82 | 2.47 | 1.23 | 2.59 | 2.41 | 2.3 | 0 | 0 | 0 | 0 |

From the above results, it was confirmed that the viscosity of each dispersion was significantly increased in the cases where sulfur was not contained (Comparative Examples 1 to 4). That is, the first and second dispersants agglomerated, and the viscosity of the dispersion increased.

The dispersant of Example 1 includes the first dispersant and the second dispersant that can form hydrogen bonds with each other. However, since the first dispersant is substituted with sulfur which inhibits the hydrogen bonding between the first dispersant and the second dispersant, resulting in less agglomeration between the first and second dispersants. On the other hand, the dispersions of Comparative Example 1 and Comparative Example 2 were the same as the dispersion of Example 1, except that PVP that was unsubstituted with sulfur was used as the first dispersant. Many hydrogen bonds occurred between the first and second dispersions, and the problem that the viscosity of the dispersion increased by about 10 times or more occurred.

The dispersion of Comparative Example 3 was the same as the dispersion of Example 5, except that PVP-2 was used as the first dispersant. Due to the formation of many hydrogen bonds between the first and second dispersants, the problem that the viscosity of the dispersion increased by about 20 times or more (at 2.5/s) occurred.

The dispersion of Comparative Example 4 was the same as the dispersion of Example 6 except that PVP-2 was used as the first dispersant. In this case, due to the formation of many hydrogen bonds between the first and second dispersants, the problem that the viscosity of the dispersion increased by about 20 times or more (at 2.5/s) occurred.

To add elemental sulfur to the dispersions, a method of using sulfur-substituted PVP (Examples 1 to 6) and a method of adding a sulfide salt (Example 7) may be used. Both methods significantly lowered the viscosity of the dispersions. Among them, it was confirmed that the method using sulfur-substituted PVP more considerably reduced the viscosity.

From the above results, it is concluded that the addition of sulfur to a carbon nanotube dispersion significantly reduces the viscosity of the dispersion.

## Claims

**1.** A carbon nanotube dispersion comprising:

a carbon nanotube;
a first dispersant comprising an amide group;
a second dispersant comprising at least one functional group selected from the group consisting of hydroxyl and carboxylic groups; and
sulfur.

**2.** The dispersion of claim 1, wherein the sulfur element is contained in an amount of 0.01 to 10 wt% with respect to the total weight of a solid content of the dispersion.

**3.** The dispersion of claim 1, wherein the content of the sulfur element is 0.01% to 20% with respect to the total content of oxygen (O) and nitrogen (N), based on the total weight of a solid content of the dispersion.

**4.** The dispersion of claim 1, wherein a portion or the entity of the first dispersant is substituted with sulfur.

**5.** The dispersion of claim 1, wherein the proportion of the first dispersant substituted with sulfur in the first dispersant accounts for 10 to 100 mol%.

**6.** The dispersion of claim 1, wherein the first dispersant has at least one peak selected from the group consisting of a first peak at 1,110-1,050 $cm^{-1}$, a second peak at 1,140-1,180 $cm^{-1}$, and a third peak at 1,180-1,220 $cm^{-1}$ in a Fourier-transform infrared (FTIR) spectrum.

**7.** The dispersion of claim 1, wherein the first dispersant is polyvinylpyrrolidone, polyester amide, polycarboxylic amide, polyamido amine, thioamido amine, water soluble nylon, or a combination thereof.

**8.** The dispersion of claim 1, wherein the second dispersant comprises an aromatic ring.

**9.** The dispersion of claim 1, wherein the first dispersant and the second dispersant are contained in a weight ratio of 1:10 to 10:1.

**10.** The dispersion of claim 1, wherein the carbon nanotube has a BET specific surface area of 10 to 5,000 $m^2/g$.

**11.** The dispersion of claim 1, wherein the carbon nanotube has an average particle size (D50) of 0.1to 20 μm.

**12.** A method of preparing the carbon nanotube dispersion of any one of claims 1 to 11, the method comprising: mixing carbon nanotubes, a first dispersant comprising an amide group, and a second dispersant comprising at least one functional group selected from the group consisting of hydroxyl and carboxyl groups.

**13.** An electrode slurry composition comprising an electrode active material, a binder, and the carbon nanotube dispersion of any one of claims 1 to 11.

**14.** An electrode comprising an electrode active material layer formed from the electrode slurry composition of claim 13.

**15.** The electrode of claim 14, wherein the electrode is a negative electrode.

**16.** A secondary battery comprising the electrode of claim 14.

【FIG. 1】

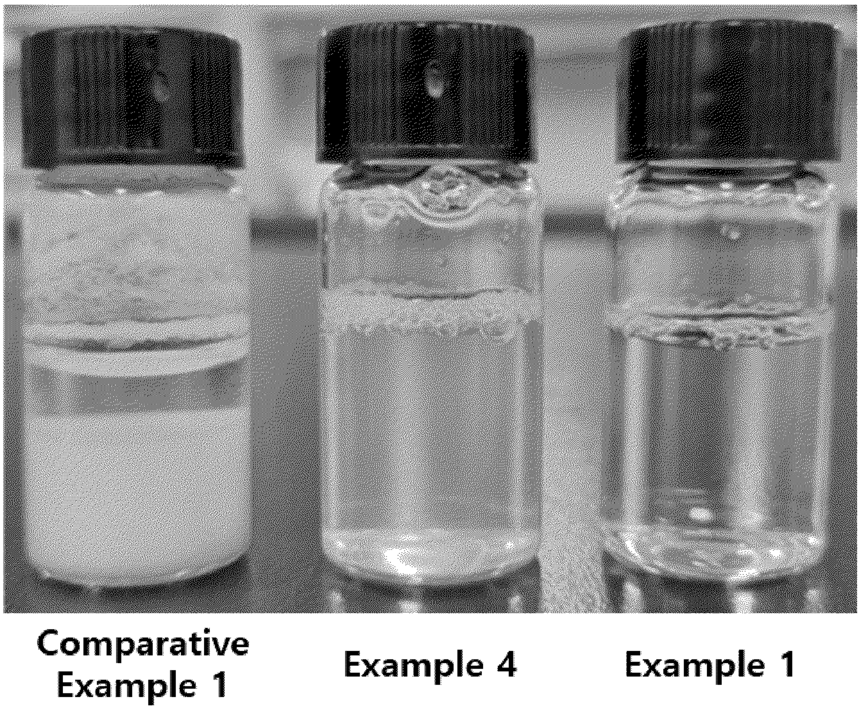
Comparative Example 1
Example 4
Example 1

【FIG. 2】

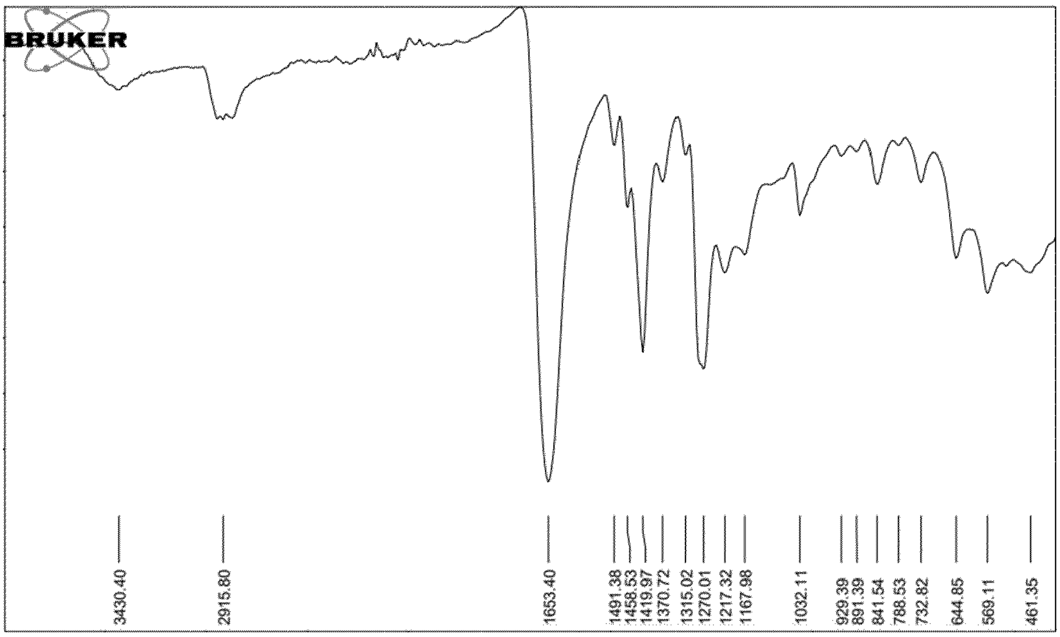
BRUKER
3430.40
2915.80
1653.40
1491.38
1458.53
1419.97
1370.72
1315.02
1270.01
1217.32
1167.98
1032.11
929.39
891.39
841.54
788.53
732.82
644.85
569.11
461.35

【FIG. 3】

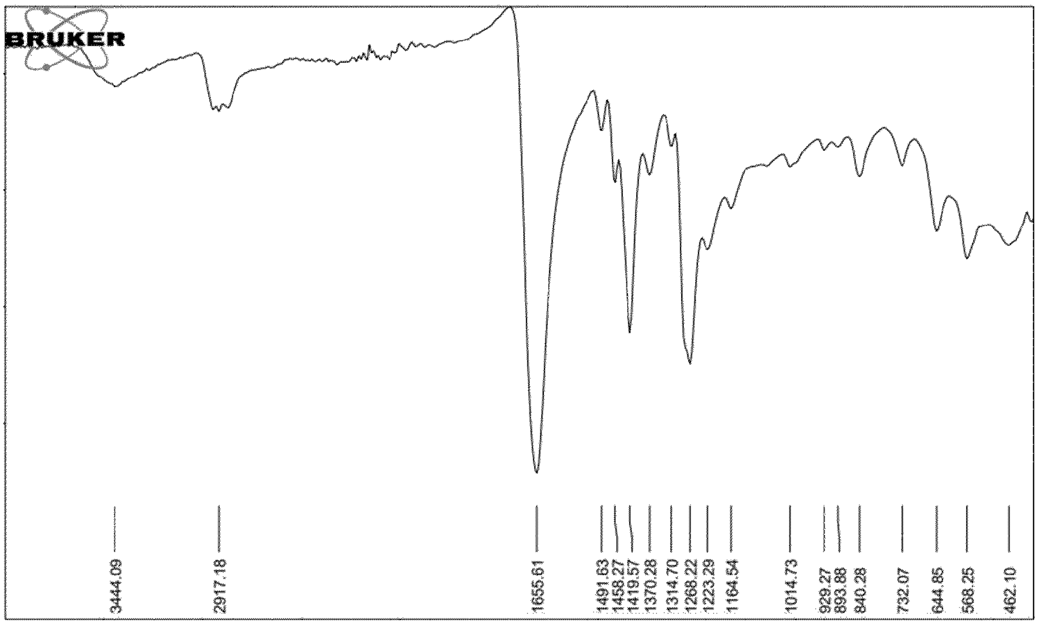
BRUKER
3444.09
2917.18
1655.61
1491.63
1458.27
1419.57
1370.28
1314.70
1268.22
1223.29
1164.54
1014.73
929.27
893.88
840.28
732.07
644.85
568.25
462.10

【FIG. 4】

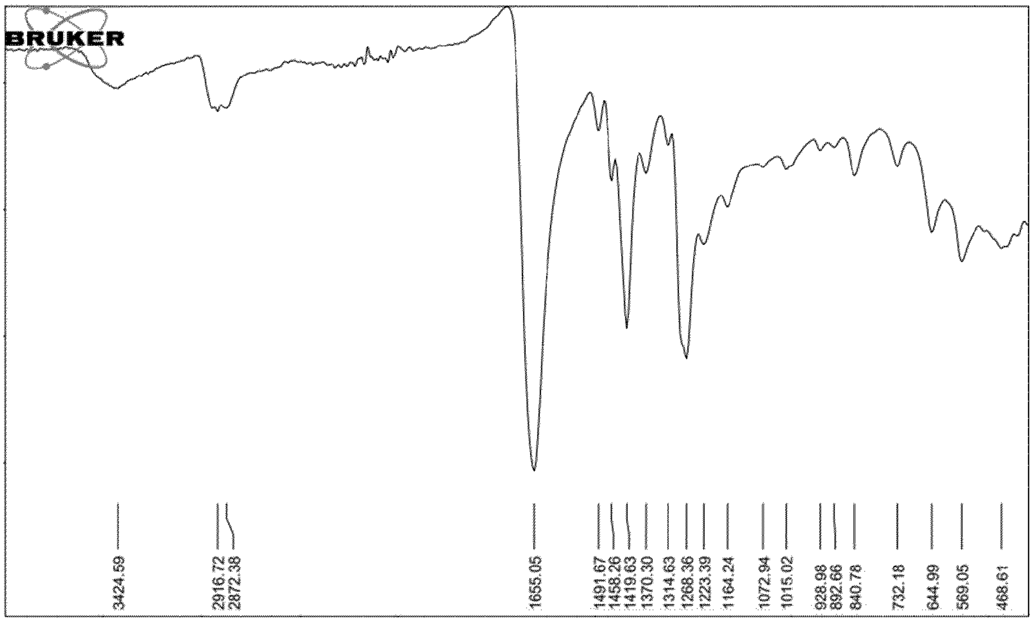
BRUKER
3424.59
2916.72
2872.38
1655.05
1491.67
1458.26
1419.63
1370.30
1314.63
1268.36
1223.39
1164.24
1072.94
1015.02
928.98
892.66
840.78
732.18
644.99
569.05
468.61

**INTERNATIONAL SEARCH REPORT**

International application No. **PCT/KR2023/012027**

**A. CLASSIFICATION OF SUBJECT MATTER**

**C01B 32/174**(2017.01)i; **H01M 4/62**(2006.01)i; **H01M 4/139**(2010.01)i; **H01M 4/13**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

C01B 32/174(2017.01); B82B 3/00(2006.01); C01B 31/02(2006.01); C01B 31/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소나노튜브(carbon nanotube), 분산액(dispersion), 폴리비닐피롤리돈(Polyvinylpyrrolidone), 황(sulfur), 음극(anode), 리튬 전지(lithium battery)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | KR 10-2013-0053015 A (DH HOLDINGS CO., LTD.) 23 May 2013 (2013-05-23)<br>See paragraph [0035], and claims 1 and 8-13. | 1-3,7,9-12<br>8,13-16<br>4-6 |
| Y | KR 10-2021-0023760 A (LG CHEM, LTD.) 04 March 2021 (2021-03-04)<br>See paragraph [0062], and claims 1 and 12-14. | 8,13-16 |
| A | KR 10-2011-0033652 A (HANWHA NANOTECH CORPORATION) 31 March 2011 (2011-03-31)<br>See paragraphs [0031]-[0033], and claims 1 and 8-13. | 1-16 |
| A | KR 10-2016-0133711 A (LG CHEM, LTD.) 23 November 2016 (2016-11-23)<br>See claims 1-8. | 1-16 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **23 November 2023** | **24 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/012027**

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0140275 A (LG CHEM, LTD.) 19 December 2019 (2019-12-19)<br>See paragraphs [0036] and [0079], and claims 4-7 and 9. | 1-16 |
| PX | KR 10-2518417 B1 (BETTERIAL CO., LTD.) 06 April 2023 (2023-04-06)<br>See claims 1-3 and 5-16.<br>*This document is a published earlier application that serves as a basis for claiming priority of the present international application. | 1-16 |

Form PCT/ISA/210 (second sheet) (July 2022)

**INTERNATIONAL SEARCH REPORT**
**Information on patent family members**

International application No.
**PCT/KR2023/012027**

| Patent document cited in search report | Publication date (day/month/year) | Patent family member(s) | Publication date (day/month/year) |
|---|---|---|---|
| KR 10-2013-0053015 A | 23 May 2013 | KR 10-1365456 B1 | 20 February 2014 |
| KR 10-2021-0023760 A | 04 March 2021 | CN 113597695 A | 02 November 2021 |
| | | EP 3936475 A1 | 12 January 2022 |
| | | JP 2022-525330 A | 12 May 2022 |
| | | JP 7180010 B2 | 29 November 2022 |
| | | US 2022-0166027 A1 | 26 May 2022 |
| | | WO 2021-034145 A1 | 25 February 2021 |
| KR 10-2011-0033652 A | 31 March 2011 | None | |
| KR 10-2016-0133711 A | 23 November 2016 | KR 10-2018289 B1 | 04 September 2019 |
| KR 10-2019-0140275 A | 19 December 2019 | CN 112004776 A | 27 November 2020 |
| | | CN 112004776 B | 25 July 2023 |
| | | CN 116750753 A | 15 September 2023 |
| | | EP 3805154 A1 | 14 April 2021 |
| | | JP 2021-520040 A | 12 August 2021 |
| | | JP 7036948 B2 | 15 March 2022 |
| | | KR 10-2023-0002198 A | 05 January 2023 |
| | | KR 10-2482505 B1 | 30 December 2022 |
| | | KR 10-2519919 B1 | 11 April 2023 |
| | | US 11542164 B2 | 03 January 2023 |
| | | US 2021-0246028 A1 | 12 August 2021 |
| | | US 2023-0085066 A1 | 16 March 2023 |
| | | WO 2019-240439 A1 | 19 December 2019 |
| KR 10-2518417 B1 | 06 April 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220112212
- KR 1020110118460


### Non-patent literature cited in the description


- *Toxicol. Res.*, April 2015, 160-168